# EUROPÄISCHE PATENTSCHRIFT

(11) **EP 0 404 755 B1**
(45) Veröffentlichungstag und Bekanntmachung des Hinweises auf die Patenterteilung: **01.12.1993**
(21) Anmeldenummer: 90890152.3
(22) Anmeldetag: 16.05.1990
(51) Int. Cl.: H02B 1/21

(54) **Verschienungssystem für Verteilerkästen**
Bussing system for distribution boxes
Systèmes de barres omnibus pour boîtes de distribution

(30) Priorität: 20.06.1989 AT 1511/89
(43) Veröffentlichungstag der Anmeldung: 27.12.1990
(73) Patentinhaber: FELTEN & GUILLEAUME AUSTRIA AG, 3943 Schrems-Eugenia 1 (AT)
(72) Erfinder: Schuh, Gerhard, A-3961 Albrechts 66, Niederösterreich (AT)
(74) Vertreter: Beer, Manfred, Dipl.-Ing.

(56) Entgegenhaltungen:
- EP-A- 0 270 996
- DE-A- 3 133 454
- DE-A- 3 316 203
- DE-U- 8 534 003

## Beschreibung

Die Erfindung betrifft ein Verschienungssystem zur Verbindung von Schaltgeräten in Verteilerkästen, insbesondere zur Verbindung eines Fehlerstromschutzschalters mit wenigstens einem Leitungsschutzschalter, wobei in die Klemmen der miteinander zu verbindenden Schalter Winkel eingesetzt sind, die miteinander durch Sammelschienen elektrisch leitend dadurch verbunden sind, daß an den freien Endabschnitten der Winkel U-förmig ausgebildete Federn vorgesehen sind, mit jeweils zwei durch einen Steg verbundenen, im wesentlichen parallelen Schenkeln, daß die Federn die Sammelschienen in leitende Verbindung mit den freien Endabschnitten der Winkel drücken.

Derartige Verschienungssysteme sind bekannt und haben den Zweck, die früher verwendeten, vom Elektriker bei der Verdrahtung angefertigten Verbindungsbügel aus Draht, mit welchen die miteinander zu verbindenden Klemmen verbunden wurden, überflüssig zu machen. Bei den bekannten Verschienungssystemen sind an den freien in die Klemmen eingesetzten Winkeln Gewindebohrungen vorgesehen, in die Schrauben eingeschraubt wurden, durch welche Schrauben mit Schlitzöffnungen versehene Sammelschienen elektrisch leitend mit den Winkeln verbunden wurden. Das Handhaben der Schrauben insbesondere deren Einsetzen in die Gewindelöcher ist eine hohe Aufmerksamkeit erfordernde Arbeit, die noch dadurch erschwert werden kann, daß Verteilerkästen nicht immer gut zugänglich sind.

Es sind auch schon Verschienungssysteme vorgeschlagen worden, bei welchen in einer Kunststoffprofilleiste Sammelschienen mit an diesen angeformten Zungen eingesetzt sind. Die an den Sammelschienen angeformten Zungen werden unmittelbar mit den miteinander zu verbindenden Klemmen verbunden. Ein Nachteil dieses Systems besteht darin, daß die miteinander zu verbindenden Schalter mit genauen Abstand voneinander montiert werden müssen, da die Zungen an den Sammelschienen einen fixen, nicht veränderbaren Abstand voneinander besitzen.

Aus dem DE-U-85 34 003 ist ein Verschienungssystem bekannt, bei dem Kontaktschienen vorgesehen sind, die einerseits mit den Anschlüssen eines elektrischen Gerätes und anderseits über Federbügel mit Sammelschienen kontaktierbar sind. Die Federbügel bestehen jeweils aus zwei Winkelbügeln, die mit den Kontaktschienen vernietet sind. Damit beim Umgreifen der Sammelschienen die für einen hinreichenden Kontakt erforderlichen Kräfte erreicht werden, ist jeder Federbügel mit einer U-förmigen Feder ausgestattet, welche die Winkelbügel eines Federbügels aufeinander zu belastet. Nachteilig bei dieser bekannten Ausführung ist es, daß die Sammelschienen ausschließlich an den Federbügeln anliegen, so daß ein Übergangswiderstand nicht nur zwischen Sammelschiene und Federbügel, sondern auch zwischen Federbügel und Kontaktschiene auftritt.

Der Erfindung liegt die Aufgabe zugrunde, ein Verschienungssystem der eingangs genannten Gattung anzugeben, mit dem das Verbinden der zusammengehörenden Klemmen eines Klemmenpaares ohne Verwendung von Schrauben, jedoch mit beliebiger Teilung, d.h. mit beliebigem Klemmenabstand auf einfache Weise durchgeführt werden kann.

Gelöst wird diese Aufgabe erfindungsgemäß dadurch, daß die Federn 5 mit ihren Stegen 9 in den Winkeln 1 vorgesehene Löcher 8 durchgreifen, daß die Federn 5 zu den freien Enden der Winkel 1 hin offen sind und daß die Schenkel parallel zu den Endabschnitten der Winkel verlaufen, so daß die Sammelschienen von der vom Schaltergerät abgewandten Seite her in das zwischen den einen Schenkel 6 der Feder 5 und den freien Endabschnitt 4 des Winkels 1 gebildete Maul 7 einschiebbar sind.

Bei Verwendung des erfindungsgemäßen Verschienungssystem genügt es, die Winkel in die miteinander zu verbindenden Klemmen einzusetzen und dort zu befestigen. Dann werden die auf die jeweils benötigte Länge zugeschnittenen Sammelschienen einfach zwischen den freien Endabschnitt des Winkels und die Feder eingeschoben, worauf die nötige lietende Verbindung hergestellt ist, wobei die Sammelschienen unmittelbar an den Winkeln anliegen. Dadurch ist eine dauerhaft gut lietende Verbindung gewährleistet. Die bei der Konstruktion gemäß dem DE-U-85 34 003 bestehende Gefahr, daß die einer nicht genügend festen Verbindung zwischen Federbügel und Kontaktschiene Luft zwischen die Sammelschiene und die Kontaktschiene eindringen kann, was zu Oxidationen und somit zu einem erhöhten Übergangswiderstand führt, besteht beim erfindungsgemäßen Verschienungssystem nicht.

Eine Ausführungsform des erfindungsgemäßen Verschienungssystems ist dadurch gekennzeichnet, daß der an der Unterseite des freien Endabschnittes des Winkels festgelegte Schenkel der Feder eine Nase aufweist, die in einen Schlitz am Endabschnitt des Winkels eingreift und am winkelseitigen Ende des Schlitzes anliegt. Bei dieser Ausführungsform sind gesonderte Befestigungsmittel zwischen Feder und Winkel entbehrlich.

Der Sitz der Feder kann erfindungsgemäß weiter verbessert werden, wenn die Feder an dem ihrem Steg benachbarten Ende des an der Unterseite des Winkels anliegenden Schenkels einen im wesentlichen U-förmigen Haken besitzt, der einen Rand des im Winkel vorgesehenen Loches umgreift. Diese Ausführungsform kann sich gemäß der Erfindung noch dadurch auszeichnen, daß vom am Winkel festgelegten Schenkel der Feder ein, vorzugsweise teilkreisförmig, gekrümmter Verbindungsabschnitt ausgeht, von dem der die Sammelschiene gegen den Winkel drückende Schenkel der Feder ausgeht. Diese Maßnahme bietet den Vorteil, daß der die Sammelschiene gegen den Winkel drückende Schenkel der Feder federn kann, ohne daß der sichere Sitz der Feder beeinträchtigt ist.

Die Erfindung erstreckt sich auch darauf, daß das freie Ende des die Sammelschiene belastenden Schenkels der Feder vom Winkel weg abgeschrägt ist, so daß zwischen dem Schenkel und dem freien Endabschnitt des Winkels ein sich nach außen erweiterndes Maul gebildet ist. So ist das Einschieben der Sammelschiene zwischen den Winkel und dem die Sammelschiene belastenden Schenkel der Feder vereinfacht.

Die Ausrichtung der Feder gegenüber dem Winkel kann im Rahmen der Erfindung dadurch gesichert werden, daß der am Winkel festgelegte Schenkel der Feder in eine an einer Seite des Winkels vorgesehene Nut eingesetzt ist. Diese Nut kann bei der Herstellung des Winkels durch Prägen hergestellt werden.

Wenn eine höhere Anpreßkraft zwischen Sammelschiene und Winkel nötig ist, kann erfindungsgemäß vorgesehen sein, daß die Feder aus wenigstens zwei flächig aneinanderliegenden Federelementen besteht.

Weitere Einzelheiten der Erfindung, sowie mit ihr erzielbare Vorteile ergeben sich aus der nachstehenden Beschreibung der in den Zeichnungen dargestellten Ausführungsbeispiele. Es zeigt
Fig. 1 bis 8 jeweils in Seitenansicht bzw. Draufsicht einen Winkel mit eingesetzter Feder,
Fig. 9 im Schnitt den Winkel aus Fig. 7 bzw. 8 und
Fig. 10 in Seitenansicht eine Feder.

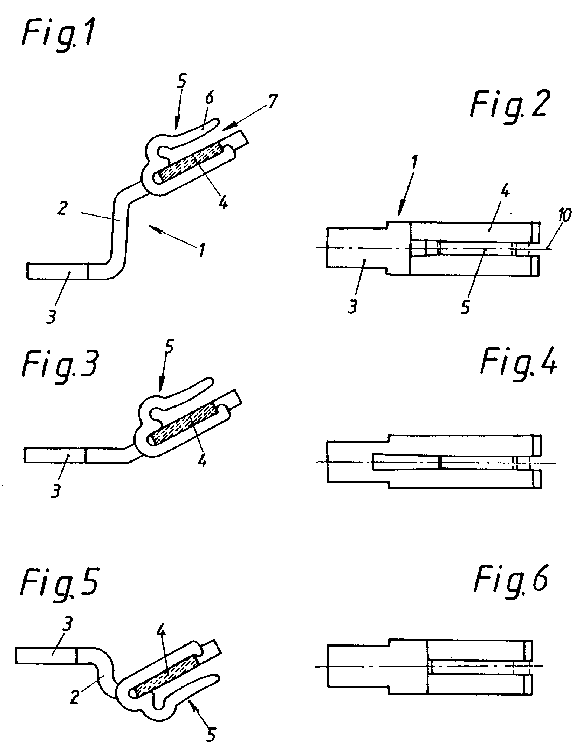

Ein in Fig. 1 gezeigter Winkel 1 besteht aus einem Streifen aus gut leitendem Metall, z.B. auf Kupferbasis, der mehrfach abgewinkelt ist. Im in den Fig. 1 und 2 gezeigten Ausführungsbeispiel besteht der Winkel 1 aus einem Mittelabschnitt 2, von dem eine Zunge 3 rechtwinkelig wegsteht, über die der Winkel 1 in einer Klemme eines Schalters, z.B. eines Leitungsschutzschalters oder eines Fehlerstromschutzschalters befestigt werden kann.

Vom anderen Ende des Mittelabschnittes 2 des Winkels 1 geht ein das freie Ende des Winkels 1 bildender Abschnitt 4 aus, der mit dem Mittelabschnitt 2 einen Winkel von 120° einschließt und an dem eine Feder 5, die im wesentlichen U-förmig ausgebildet ist, befestigt ist. Eine nicht gezeigte Sammelschiene wird auf der Oberseite des freien Endabschnittes 4 des Winkels 1 aufliegend unter den oberhalb des Abschnittes 4 liegenden Schenkel 6 eingeschoben und von der Feder 5 fest gegen den Abschnitt 4 des Winkels 1 gedrückt.

Aus Fig. 1 ist erkennbar, daß sich das vom Schenkel 6 der Feder 5 und dem freien Endabschnitt 4 Winkels 1 benachbarte Maul 7 durch die besondere in der Zeichnung dargestellte Formgebung des Schenkels 6 der Feder 5 erweitert, so daß eine Sammelschiene leicht eingeschoben werden kann.

Die in den Fig. 3 und 4, 5 und 6 bzw. 7 und 8 gezeigten Ausführungsformen von Winkeln 1 unterscheiden sich von der in Fig. 1 gezeigten Ausführungsform durch unterschiedliche Längen des Mittelabschnittes 2 bzw. durch Fehlen desselben, so daß der freie Endabschnitt 4 bzw. das Maul 7 in unterschiedlichen Höhenlagen bezüglich der an einer Klemme zu befestigenden Zunge 3 des Winkels 1 ausgerichtet ist. Dadurch wird gewährleistet, daß die Sammelschienen, welche verschiedene Leiter, z.B. die Leiter L₁, L₂, L₃ und den N-Leiter miteinander verbinden, durch entsprechende Wahl der Winkel 1 (hiezu können diese mit Ziffern oder Buchstaben markiert sein) in unterschiedlichen, zueinander parallelen Ebenen angeordnet werden. Dadurch ergeben sich die aufgrund der verschiedenen Spannungspotentiale der Sammelschienen erforderlichen Luftstrecken.

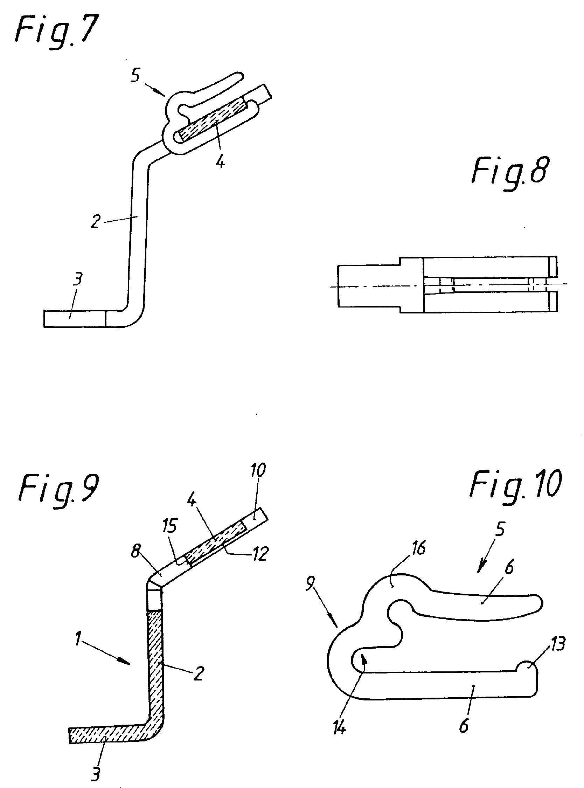

Wie aus Fig. 9 ersichtlich, besitzt jeder Winkel 1 im Knickbereich zwischen seinen Abschnitten 2 und 4 ein Loch 8, in dem der Steg 9 der Feder 5 aufgenommen ist. An seinem freien Ende besitzt der Winkel 1 einen zum freien Ende hin offenen Schlitz 10.

Wie aus Fig. 10 ersichtlich, besitzt jede Feder 5 zwei Schenkel 6 und 6′, die miteinander durch den Steg 9 verbunden sind. Die Feder 5 wird über ihren Schenkel 6′ am Abschnitt 4 des Winkels 1 befestigt, wobei der Steg 6′ in eine in eine der Seiten des Abschnittes 4 des Winkels 1 eingeprägte Nut 12 eingreift, so daß die Feder 5 gegen seitliches Verschieben gesichert ist.

Am freien Ende des Schenkels 6′ ist ein Ansatz 13 vorgesehen, der im Schlitz 10 am freien Ende des Abschnittes 4 des Winkels 1 aufgenommen ist, wenn eine Feder 5 am Winkel 1 befestigt ist. An seinem dem Ansatz 13 gegenüberliegenden Ende ist der Steg 9 der Feder 5 in Form eines Hakens 14 ausgebildet, der bei am Winkel 1 angesetzter Feder 5 den Rand 15 des Loches 8 umgreift. Auf diese Weise kann die Feder 5 einfach aufgerastet werden und ist sowohl in Quer- als auch in Längsrichtung des Abschnittes 4 des Winkels 1 unverrückbar festgelegt.

Der oberhalb des Abschnittes 4 des Winkels 1 angeordnet Schenkel 6 der Feder 5 (bei der Ausführungsform der Fig. 5 und 6 liegt dieser Schenkel 6 unter dem Abschnitt 4) ist über einen teilkreisbogenförmig gekrümmten Verbindungsabschnitt 16 mit dem freien Ende des Hakens 14 verbunden (es besteht also der Steg 9 der Feder 5 aus dem den Haken 14 bildenden Teil und dem den Schenkel 6 tragenden Verbindungsabschnitt 16).

Durch die Form des Verbindungsabschnittes 16 wird gewährleistet, daß der Schenkel 6 unter elastischer Verformung des Verbindungsabschnittes 16 federn kann, ohne daß der sichere Sitz der Feder 5 am Winkel 1 gefährdet ist.

Es ist noch darauf hinzuweisen, daß die Federn 5 für gewöhnlich aus zwei identen Stanzteilen bestehen, da die Federn 5 nur unter übermäßigem Verschleiß des Stanzwerkzeuges aus dickerem Werkstoff (Federstahl) gestanzt werden können.

## Patentansprüche

1. Verschienungssystem zur Verbindung von Schaltgeräten in Verteilerkästen, insbesondere zur Verbindung eines Fehlerstromschutzschalters mit wenigstens einem Leitungsschutzschalter, wobei in die Klemmen der miteinander zu verbindenden Schaltgeräte Winkel (1) eingesetzt sind, die miteinander durch Sammelschienen elektrisch leitend dadurch verbunden sind, daß an den freien Endabschnitten (4) der Winkel (1) U-förmig ausgebildete Federn (5) vorgesehen sind, mit jeweils zwei durch einen Steg (9) verbundenen, im wesentlichen parallelen Schenkeln (6), und daß die Federn die Sammelschienen in leitende Verbindung mit den freien Endabschnitten (4) der Winkel (1) drücken, dadurch gekennzeichnet, daß die Federn (5) mit ihren Stegen (9) in den Winkeln (1) vorgesehene Löcher (8) durchgreifen, daß die Federn (5) zu den freien Enden der Winkel (1) hin offen sind und daß die Schenkel parallel zu den Endabschnitten der Winkel verlaufen, so daß die Sammelschienen von der vom Schaltgerät abgewandten Seite her in das zwischen den einen Schenkel (6) der Feder (5) und den freien Endabschnitt (4) des Winkels (1) gebildete Maul (7) einschiebbar sind.

2. Verschienungssystem nach Anspruch 1, dadurch gekennzeichnet, daß der an der Unterseite des freien Endabschnittes (4) des Winkels (1) festgelegte Schenkel (6') der Feder (5) eine Nase (13) aufweist, die in einen Schlitz (10) am Endabschnitt (4) des Winkels (1) eingreift und am winkelseitigen Ende des Schlitzes (10) anliegt.

3. Verschienungssystem nach Anspruch 1 oder 2, dadurch gekennzeichnet, daß die Feder (5) an dem ihrem Steg (9) benachbarten Ende des an der Unterseite des Winkels (1) anliegenden Schenkels (6') einen im wesentlichen U-förmigen Haken (14) besitzt, der einen Rand (15) des im Winkel (1) vorgesehenen Loches (8) umgreift.

4. Verschienungssystem nach Anspruch 3, dadurch gekennzeichnet, daß vom am Winkel (1) festgelegten Schenkel (6′) der Feder (5) ein, vorzugsweise teilkreisförmig, gekrümmter Verbindungsabschnitt (16) ausgeht, von dem der die Sammelschiene gegen den Winkel (1) drückende Schenkel (6) der Feder (5) ausgeht.

5. Verschienungssystem nach einem der Ansprüche 1 bis 4, dadurch gekennzeichnet, daß das freie Ende des die Sammelschiene belastenden Schenkels (6) der Feder vom Winkel (1) weg abgeschrägt ist, so daß zwischen dem Schenkel (6) und dem freien Endabschnitt (4) des Winkels (1) ein sich nach außen erweiterndes Maul (7) gebildet ist.

6. Verschienungssystem nach einem der Ansprüche 1 bis 5, dadurch gekennzeichnet, daß der am Winkel (1) festgelegte Schenkel (6′) der Feder (5) in eine an einer Seite des Winkels (1) vorgesehene Nut (12) eingesetzt ist.

7. Verschienungssystem nach Anspruch 6, dadurch gekennzeichnet, daß die Nut (12) durch Prägen hergestellt ist.

8. Verschienungssytem nach einem der Ansprüche 1 bis 7, dadurch gekennzeichnet, daß die Feder (5) aus wenigstens zwei flächig aneinanderliegenden Federelementen besteht.

## Claims

1. Bar connection system for connecting switchgear in distribution boxes, in particular for connecting a fault current protective switch to at least one line protective switch, angled pieces (1) being inserted in the terminals of the switchgear to be connected to one another, these angled pieces being connected electrically conductively to one another by bus bars by the fact that U-shaped springs (5), each having two substantially parallel legs (6) connected by a web (9), are provided at the free end sections (4) of the angled pieces (1), and in that the springs press the bus bars into a conductive connection with the free end sections (4) of the angled pieces (1), characterized in that the springs (5) penetrate by means of their webs (9) holes (8) provided in the angled piece (1), in that the springs (5) are open towards the free ends of the angled pieces (1), and in that the legs run parallel to the end sections of the angled pieces, so that the bus bars from the side remote from the switchgear may be pushed into the mouth (7) formed between the one leg (6) of the spring (5) and the free end section (4) of the angled piece (1).

2. Bar connection system according to Claim 1, characterized in that the leg (6'), fixed against the underside of the free end section (4) of the angled piece (1), of the spring (5) has a nose (13) which engages in a slot (10) at the end section (4) of the angled piece (1) and bears against the end of the slot (10) on the angled-piece side.

3. Bar connection system 'according to Claim 1 or 2, characterized in that the spring (5) has at the end, which is adjacent to its web (9), of the leg (6') bearing against the underside of the angled piece (1) a substantially U-shaped hook (14) which engages around an edge (15) of the hole (8) provided in the angled piece (1).

4. Bar connection system according to Claim 3, characterized in that from the leg (6'), fixed against the angled piece (1), of the spring (5) there extends a curved connection section (16), preferably curved in the shape of an arc, and from this there extends the leg (6), pressing the bus bar against the angled piece (1), of the spring (5).

5. Bar connection system according to one of Claims 1 to 4, characterized in that the free end of the spring leg (6) exerting a load on the bus bar is chamfered away from the angled piece (1) so that an outwardly widening mouth (7) is formed between the leg (6) and the free end section (4) of the angled piece (1).

6. Bar connection system according to one of Claims 1 to 5, characterized in that the leg (6'), fixed against the angled piece (1), of the spring (5) is inserted in a groove (12) provided on one side of the angled piece (1).

7. Bar connection system according to Claim 6, characterized in that the groove (12) is produced by stamping.

8. Bar connection system according to one of Claims 1 to 7, characterized in that the spring (5) comprises at least two spring elements bearing flatly against one another.

## Revendications

1. Système de barres collectrices pour relier des commutateurs dans des boîtes de distribution, en particulier pour relier un commutateur de sécurité à courant de défaut à au moins un commutateur de sécurité de ligne, des cornières (1) étant disposées dans les bornes de connexion des commutateurs devant être reliés les uns aux autres, qui sont reliées les unes aux autres en étant électriquement conductrices par des barres collectrices, par le fait que des ressorts (5) en forme de U sont prévus aux sections d'extrémité (4) libres des cornières (1), avec deux branches (6) essentiellement parallèles reliées respectivement par une entretoise (9), et que les ressorts poussent les barres collectrices en liaison conductrice avec les sections d'extrémité (4) libres des cornières (1),
caractérisé en ce que les ressorts (5) sont en prise par leur entretoise (9) dans des trous (8) prévus dans les cornières (1), que les ressorts (5) sont ouverts vers les extrémités libres des cornières (1) et que les branches s'étendent parallèlement aux sections d'extrémité des cornières, de telle sorte que les barres collectrices peuvent être introduites, depuis le côté opposé au commutateur, dans la mâchoire (7) formée entre l'une des branches (6) du ressort (5) et la section d'extrémité (4) libre de la cornière (1).

2. Système de barres collectrices selon la revendication 1,
caractérisé en ce que, la branche (6') du ressort (5), fixée sur la face inférieure de la section d'extrémité (4) libre de la cornière (1) présente un bec (13) qui vient en prise dans une fente (10) à la section d'extrémité (4) de la cornière (1) et est en appui sur l'extrémité du côté de la cornière de la fente (10).

3. Système de barres collectrices selon la revendication 1 ou 2,
caractérisé en ce que le ressort (5) possède, à l'extrémité adjacente à son entretoise (9) de la branche (6') en appui sur la face inférieure de la cornière (1) un crochet (14) essentiellement en forme de U qui entoure un bord (15) du trou (8) prévu dans la cornière (1).

4. Système de barres collectrices selon la revendication 3,
caractérisé en ce qu'une section de liaison (16) recourbée, de préférence en forme de portion de cercle, part de la branche (6) du ressort (5) fixée à la cornière (1), de laquelle part la branche (6) du ressort (5) qui presse la barre collectrice contre la cornière (1).

5. Système de barres collectrices selon l'une des revendications 1 à 4,
caractérisé en ce que l'extrémité libre de la branche (6) du ressort qui charge la barre collectrice est inclinée en s'écartant de la cornière (1), de telle manière qu'une mâchoire (7) s'élargissant vers l'extérieur est formée entre la branche (6) et la section d'extrémité (4) libre de la cornière (1).

6. Système de barres collectrices selon l'une des revendications 1 à 5,
caractérisé en ce que la branche (6') du ressort (5) fixée à la cornière (1) est logée dans une rainure (12) prévue dans un côté de la cornière (1).

7. Système de barres collectrices selon la revendication 6,
caractérisé en ce que la rainure (12) est fabriquée par matriçage.

8. Système de barres collectrices selon l'une des revendications 1 à 7,
caractérisé en ce que le ressort (5) est constitué d'au moins deux éléments de ressort plans disposés côte à côte.
